# DEMANDE DE BREVET EUROPEEN

(11) **EP 1 275 789 A1**
(43) Date de publication de la demande: **15.01.2003**
(21) Numéro de dépôt: 02291722.3
(22) Date de dépôt: 09.07.2002
(51) Int. Cl.: E04B 1/74, D04H 1/54

(54) **Matériau thermiquement isolant à base de fibres lignocellulosique et procédé de fabrication**

(30) Priorité: 10.07.2001 FR 0109164
(71) Demandeur: Société des panneaux Isoroy, 19200 Ussel (FR)
(72) Inventeur: Neel, Michel, 47000 Agen (FR)
(74) Mandataire: Rousset, Jean-Claude

(57) **Abrégé**

Le matériau thermiquement isolant est constitué de 70 % à 90 % en poids de fibres de bois et de 10 % à 30 % de fibres synthétiques jouant le rôle d'un liant. Les fibres de bois ont un rapport longueur/diamètre compris entre 5 et 20 et une longueur maximale de 2 mm. Le matériau peut contenir en outre de 0 % à 5 % de fibres végétales autres que les fibres de bois. Les fibres synthétiques peuvent être constituées d'une âme ayant une température de fusion supérieure à 150 °C et d'un gainage ayant une température de fusion inférieure à 150 °C et jouant le rôle de liant.

## Description

La présente invention concerne un matériau thermiquement isolant à base de fibres ligno-cellulosiques, notamment pour des applications au bâtiment.

On connaît déjà des matériaux isolants utilisés dans le bâtiment, notamment sous forme de panneaux. Ces matériaux sont constitués principalement de produits artificiels comme, par exemple, les laines de verre, de roche, les mousses de polyuréthanne, les polystyrènes expansés et extrudés. En outre, ils contiennent fréquemment des produits tels que le formol, le phénol, des composés organiques volatils, ou des composés halogénés susceptibles de provoquer des nuisances pour l'environnement.

La présente invention vise à proposer un matériau isolant qui remédie à ces inconvénients. Un tel matériau doit être composé principalement de produits naturels. En outre, il ne doit contenir aucun produit susceptible de provoquer des nuisances pour l'environnement.

Ces buts sont atteints, conformément à l'invention, par le fait que le matériau isolant est constitué essentiellement, en masse, de 70 % à 90 % de fibres de bois, de 0 % à 5 % de fibres végétales autres que les fibres de bois et de 10 % à 30 % de fibres synthétiques assurant la liaison entre les fibres végétales.

De préférence, les fibres de bois ont un rapport longueur/diamètre compris entre 5 et 20. De préférence encore, leur longueur maximale est de 2 mm.

Les fibres synthétiques peuvent être constituées d'une âme en un premier polymère ne subissant pas de transformation à une température de traitement déterminée et d'un gainage en un second polymère se ramollissant à ladite température de traitement.

La température de traitement est, par exemple, de 150 °C.

Le premier polymère constituant l'âme des fibres synthétiques peut être choisi dans le groupe comprenant le polyester, le polypropylène et les polyamides.

Le second polymère constituant le gainage des fibres synthétiques peut être choisi dans le groupe comprenant les co-polyesters, le polyéthylène, les co-polyamides, le polyamide 6.

L'invention concerne également un procédé de fabrication du matériau thermiquement isolant. Selon ce procédé:
- on mélange mécaniquement les fibres du matériau;
- on met en forme les fibres par enchevêtrement isotrope des différentes fibres;
- on lie les fibres par fusion au moins partielle des fibres synthétiques.

Les fibres peuvent être mélangées par un équipement mécanique de type ouvreuse de fibres textiles. La constitution du panneau peut se faire dans une machine de nappage pneumatique. La fusion du liant peut s'effectuer dans un tunnel à balayage d'air chaud comportant, éventuellement, une zone finale de refroidissement.

D'autres caractéristiques et avantages de l'invention apparaîtront à la lecture de la description détaillée qui suit de modes de réalisations préférés.

Le matériau thermiquement isolant selon l'invention a la composition suivante (en masse).

| | |
|---|---|
| Fibres de bois | 70 % à 90 % |
| Autres fibres végétales | 0 % à 5 % |
| Fibres synthétiques | 10 % à 30 % |

Les fibres de bois peuvent être obtenues par défibrage thermo-mécanique, suivi éventuellement d'un raffinage en fonction du degré de fibrillation requis pour l'application envisagée.

Les fibres ont un rapport longueur/diamètre compris entre 5 et 20. Leur longueur maximale est de 2 mm. Toutes les essences de bois peuvent être utilisées pour obtenir les fibres, à l'exception des essences taniques comme le châtaignier, le chêne, le quebracho. On peut utiliser notamment le pin, le sapin, l'épicéa, le bouleau, le peuplier, le frêne, le charme et le hêtre.

Les fibres végétales utilisées sont avantageusement des fibres à usage industriel comme le lin, le chanvre, le sisal, le kénaf, le jute, le miscanthus, le sorgho, la paille, les fibres de coco, l'alpha, le kapok, le coton. Bien entendu, ces exemples ne sont pas limitatifs et d'autres fibres pourraient être utilisées. Les fibres synthétiques utilisées sont constituées de deux polymères différents. L'un d'eux forme une âme ayant une température de fusion supérieure à 150 °C. Cette âme n'est pas transformée durant le procédé de fabrication du matériau. Elle assure la cohésion de la fibre. L'âme est entourée d'un gainage ayant une température de fusion inférieure à 150 °C. Ce gainage joue le rôle d'un liant pour l'ensemble des fibres constitutives du matériau. On utilise de préférence les couples de matériaux suivants, le premier matériau énoncé constituant l'âme, le second le gainage:
- polyester/co-polyester,
- polypropylène/polyéthylène basse densité,
- polypropylène/polyéthylène haute densité,
- polyamide/co-polyamide,
- polyamide 6-6/polyamide 6.

Ces exemples ne sont bien entendu pas limitatifs. De manière générale, toute fibre à deux composants dont les constituants satisfont des conditions appropriées quant aux températures de fusion peuvent être utilisées.

Divers additifs connus peuvent être utilisés pour conférer au produit de meilleures qualités en termes de résistance aux micro-organismes ou aux agents lignivores. D'autres additifs sont utilisés éventuellement pour satisfaire des critères d'hydrofugation et d'ignifugation.

Le matériau obtenu se présente sous la forme de plaques rigides et compactes, de masse volumique inférieure à 100 kg/m³, d'épaisseur comprise entre 20 et 300 mm, de couleur bois, sans autre odeur que l'odeur naturelle du bois.

## Revendications

1. Matériau fibreux thermiquement isolant, **caractérisé en ce qu'**il est constitué essentiellement, en masse, de 70 % à 90 % de fibres de bois, de 0 % à 5 % de fibres végétales autres que les fibres de bois et de 10 % à 30 % de fibres synthétiques assurant la liaison entre les fibres végétales.

2. Matériau selon la revendication 1, dans lequel les fibres de bois ont un rapport longueur/diamètre compris entre 5 et 20.

3. Matériau selon l'une des revendications 1 et 2, dans lequel les fibres de bois ont une longueur maximale de 2 mm.

4. Matériau selon l'une des revendications précédentes, dans lequel les fibres de bois proviennent au moins pour l'essentiel d'une ou plusieurs essences choisies parmi le pin, le sapin, l'épicéa, le bouleau, le peuplier, le frêne, le charme et le hêtre.

5. Matériau selon l'une des revendications précédentes, dans lequel les fibres végétales autres que les fibres de bois sont choisies parmi les fibres de lin, de chanvre, de sisal, de kénaf, de jute, de miscanthus, de sorgho, de paille, de coco, d'alpha, de kapok et de coton.

6. Matériau selon l'une des revendications précédentes, dans lequel les fibres synthétiques sont constituées d'une âme en un premier polymère ne subissant pas de transformation à une température de traitement déterminée et d'un gainage en un second polymère se ramollissant à ladite température de traitement.

7. Matériau selon la revendication 6, dans lequel ladite température de traitement est de 150 °C.

8. Matériau selon l'une des revendications 6 et 7, dans lequel le premier polymère constituant l'âme des fibres synthétiques est choisi dans le groupe comprenant les polyesters, le polypropylène et les polyamides.

9. Matériau selon l'une des revendications 6 à 8, dans lequel le second polymère constituant le gainage des fibres synthétiques est choisi dans le groupe comprenant les co-polyesters, le polyéthylène, les co-polyamides, le polyamide 6.

10. Matériau selon la revendication 9, dans lequel le couple premier polymère/second polymère est choisi parmi les suivants:
- polyester/co-polyester,
- polypropylène/polyéthylène basse densité,
- polypropylène/polyéthylène haute densité,
- polyamide/co-polyamide,
- polyamide 6-6/polyamide 6.

11. Matériau selon l'une des revendications précédentes, contenant au moins un additif propre à améliorer sa résistance aux micro-organismes ou aux agents lignivores et/ou à lui conférer des propriétés d'hydrofugation et/ou d'ignifugation.

12. Panneau isolant rigide et compact de masse volumique inférieure à 100 kg/m³ et d'épaisseur comprise entre 20 et 300 mm, formé d'un matériau selon l'une des revendications précédentes.

13. Procédé de fabrication d'un matériau thermiquement isolant selon l'une des revendications 1 à 10, dans lequel:
- on mélange mécaniquement les fibres du matériau;
- on met en forme les fibres par enchevêtrement isotrope des différentes fibres;
- on lie les fibres par fusion au moins partielle des fibres synthétiques.

14. Procédé selon la revendication 12, dans lequel on mélange les fibres par un équipement mécanique de type ouvreuse de fibres textiles.

15. Procédé selon l'une des revendications 12 et 13, dans lequel on met en forme les fibres sous la forme d'un panneau dans une machine de nappage pneumatique.

16. Procédé selon l'une des revendications 12 à 14, dans lequel on fond les fibres synthétiques dans un tunnel à balayage d'air chaud.
